Europäisches Patentamt

European Patent Office

Office européen des brevets

(11) Publication number: **0 323 690**
**A1**

# EUROPEAN PATENT APPLICATION

(21) Application number: **88300151.3**

(22) Date of filing: **08.01.88**

(51) Int. Cl.⁴: **B01D 17/05 , C02F 1/40 , C02F 1/66 , //C02F1/52**

(43) Date of publication of application:
**12.07.89 Bulletin 89/28**

(84) Designated Contracting States:
**CH DE FR GB IT LI NL**

(71) Applicant: **Kabushiki Kaisha ASTEC**
**12-6 Kyomachi 1-chome**
**Himeji-shi Hyogo 670(JP)**

(72) Inventor: **Nishimura, Tsutomu**
**2, Itokuji-cho**
**Himeji-shi Hyogo 670(JP)**

(74) Representative: **Brown, John David et al**
**FORRESTER & BOEHMERT**
**Widenmayerstrasse 4/I**
**D-8000 München 22(DE)**

(54) **Method of separating and recovering a trace amount of oil or protein by donation of proton.**

(57) A method of separating and recovering a trace amount of oil and/or protein contained in water by donating proton to water containing a trace amount of oil and/or protein. This method can separate and recover even a trace amount of oil and/or protein contained in water by a simple operation and at high efficiency.

EP 0 323 690 A1

## Method of separating and recovering a trace amount of oil or protein by donation of proton

### BACKGROUND OF THE INVENTION

Field of the invention:

This invention relates to a method of separating and recovering a trace amount of oil or protein from water containing a trace amount of oil or protein by donation of proton.

Description of the prior art:

Sewage, especially waste water generated during processes at food processing factories and at marine products processing ships, contain micro-suspended solids, colloidal substances, a trace amount of oil or protein as dissolved substances. If sewage and waste water as mentioned above are discharged as they are, it accelerates eutrophication of an environmental water system. In order to cope with such drawback, it has been practiced to decompose protein, oil, etc. by giving waste water a biological treatment, namely, primary and secondary treatments, and then to remove suspended solids by a tertiary treatment, namely, by the coagulating sedimentation. However, it is difficult to separate oil, especially to separate a trace amount of oil, contained in water as emulsion or as water-soluble ingredients, even by the centrifugal separating method, much more so to treat a large quantity of water.

As the above conventional method requires many treating processes, for which huge equipment and a large quantity of energy are required, sludge which is generated in large quantities due to use of a coagulant and other agents must be treated. Nevertheless, complete removal of a trace amount of oil and others cannot be done.

### SUMMARY OF THE INVENTION

A main object of the present invention is to provide a method of separating and recovering easily effective ingredients remaining in sewage and waste water, namely, a trace amount of oil or protein.

Another object of the present invention is to simplify the treating process, to reduce treating cost and to improve treating effect.

A further object of the present invention is to purify waste water, while separating and recovering effective ingredients remaining in waste water.

In order to solve the problems mentioned above and to attain the above objects, the present inventors have made earnest studies and finally discovered that by donating proton to water containing a trace amount of oil or protein, while a trace amount of oil rises to the surface as drops of oil and is separated, protein generates protein condensation precipitation and is separated from a water system. This discovery has led to the present invention.

As to the method of donating proton, various methods are available, such as the method of electrolyzing water, the ion exchange method, the electron collision method, the method of donating directly crystal water-containing proton-releasing crystalline mineral, the method by using proton dissolved water obtained by the preceding method, and the like. In the above methods, supply of magnetic field can heighten separating and recovering effect in some cases. As to crystal water-containing proton-releasing crystalline mineral, any material can be used so long as it has characteristic of "easy to release proton", such as natural cristobalite, synthetic cristobalite, zeolite and the like.

As to the amount of proton to be donated which is necessary for separating a trace amount of oil or protein, in the case where proton donation is done directly with crystal water-containing proton-releasing crystalline mineral, the amount of proton to be donated is determined by aiming at pH of water being treated reaching a neutral area under a medium or low magnetic field condition in which the maximum magnetic flux density is about 100 - 600 gausses.

The amount of the treating water to be added in the case where proton is donated by proton dissolved water (in the case of a diluting treatment), should be such that pH of untreated water after treating water was added to the untreated water is more than 0.3 lower than that of the untreated water at the first stage and pH of the untreated water after it was diluted is within the neutral area of 6 - 8. In either of the case where proton donation is done directly or indirectly with crystal water containing proton-releasing crystalline mineral to water being treated, the amount of proton to be donated in oil separation is determined by aiming at vanishment of emulsion and complete rising of oil drops to the surface, as well as the pH of water being treated mentioned above.

For separating and recovering protein contained in water, it is ideal to adjust pH after dilution by adding proton dissolved water to less than 6.9.

For separation of a trace amount of oil, the method of adding proton dissolved water, namely, the method using a diluting treatment, was most effective.

According to the present invention, not only the object of treating waste water (purifying) but also the object of utilizing effective ingredients remaining in waste water can be attained.

According to the present invention, a trace amount of oil contained in water in the state of solution or as emulsion and protein contained in water can be treated directly, without conventional primary, secondary and tertiary treatments, by a simple operation for separation and recovering of them at high efficiency, free from generation of a large quantity of sludge.


## DETAILED DESCRIPTION OF THE INVENTION


A description is made below of the present invention with reference to several embodiments but the present invention is not limited to such embodiments. In these embodiments, the method by using cristal water-containing proton-releasing crystalline mineral was employed as the easiest, cheapest and safest method. Characteristic values of untreated water and treated water were measured in accordance with JIS method.


Example 1 Separation of a trace amount of oil


(Sample water)

Water containing a trace amount of oil at the receiving side of Himeji Municipal Sewage Treatment Plant.


(Method of donating proton)

10 kg. (grain size < 20m.m.) of natural cristobalite was soaked in 15 liters of effluent from a tank at the treatment plant for 6 hours at the maximum magnetic flux density of 230 gausses to have proton dissolved fully in water, when pH of the water was 4.45. 2ppm of Fe or Al ion was added to the proton dissolved water and its function was adjusted to obtain treating water which is proton dissolved water. Proton was donated by this proton dissolved water.


(Experiment of separating a trace amount of oil)

Proton dissolved water and untreated sewage containing a trace amount of oil were continuously flowed down and mixed at the speed of 0.02 ℓ/hr and 10 ℓ/hr respectively and introduced into a deposition tank. Various ions, suspended solids, bacteria, etc. in sewage were deposited as floc-like precipitates. When the floc-like precipitates were left as they were for 120 minutes, a trace amount of oil rose to the surface and was separated.


(Results of measurement)

Measured values of each ingredient before and after treatment were as shown in Table 1.

3

Remark:
Values after treatment are measured values of supernatant water

## Table 1

| Ingredient Sample | pH | n-hexane extract (ppm) | Visibility (cm) | Water temperature ($^o$C) |
|---|---|---|---|---|
| Untreated sewage | 7.0 | 7.3 | 8 | 26 |
| Treated sewage | 6.7 | $<0.5$ | $>30$ | 26 |
| Percentage of removal | – | $>99$ | $>22$ (improved depth) | – |

From the values of n-hexane extract and degree of visibility, it is apparent that oil which existed in untreated water in the state of solution or emulsion was separated and removed at a very high rate.

Example 2 Separation of a trace amount of oil

(Sample water)

General waste water containing traces of oil partly in emulsion and partly in water-soluble oil.

(Method of donating proton)

1. Proton was donated by proton dissolved water of Example 1.
2. Proton was donated directly by natural cristobalite.

(Experiment of separation of traces of oil)

1. 2m $\ell$ of proton dissolved water was added to 1 liter of sample water for mixing. The mixture was adjusted to pH 7.1 and was left for 60 minutes stationarily and precipitates generated were deposited and oil was made to rise to the surface as drops of oil.
2. 500g of natural cristobalite (grain size < 20m.m.) was soaked in one liter of sample water and both were left stationarily for 120 minutes in a tank under the condition of the maximum magnetic flux density of 220 gausses. pH after treatment was adjusted to 6.4 and a trace amount of oil was made to rise to the surface as drops of oil and was separated.

(Results of measurement)

Untreated water and treated water of the above 1. and 2. were measured for pH, n-hexane extract and degree of turbidity. Measured values are as shown in Table 2. Values after treatment were measured values of supernatant water.

4

## Table 2

| Ingredient Sample | pH | n-hexane extract (ppm) | Degree of turbidity (°) | Water temperature (°C) |
|---|---|---|---|---|
| Untreated. general sewage containing oil | 7.4 | ⟨0.5 | 18 | 27 |
| Treated water added with proton dissolved water | 7.1 | ⟨0.5 | ⟨1 | 27 |
| Treated water soaked in cristobalite | 6.4 | ⟨0.5 | 3 | 27 |

Because of a trace amount of oil, n-hexane extract was less than 0.5ppm in any sample water and no difference was found between characteristic values before and after treatment, but in respect of rising of oil drops to the surface and degree of turbidity, big difference was found between numerical values before and after treatment, from which it was ascertained that a trace amount of oil contained in water in solution or as emulsion was separated.

In any of the above separating methods 1. and 2., while a trace amount of oil contained in water rose to the surface as drops of oil and was separated, emulsion was vanished and thus oil was separated completely from water. From the measured values of degree of turbidity, it could be seen that the separating method 1. (diluting treatment) is most effective for separating a trace amount of oil contained in water in the state of solution or as emulsion.

Example 3 Separation of protein and a trace amount of oil

(Sample water)

1. Water containing albumen.
2. Fish processing water (including sea water).
3. Food processing water (water containing water-soluble protein).
4. Water containing vegetable protein.

(Method of donating proton)

10 kg. of natural cristobalite (grain size < 20m.m.) was soaked in 15 liters of effluent water from a tank at a sewage treatment plant and was left for 6 hours under the condition of the maximum magnetic flux density of 230 gausses to dissolve proton fully in water. pH of the water thus obtained was 4.45. 2ppm of Fe ion or Al ion was added to this proton dissolved water and its function was adjusted to obtain treating water which is proton dissolved water. Proton was donated by this proton dissolved water.

(Experiment of separation of protein and a trace amount of oil)

1 - 5m ℓ of the above proton dissolved water was added to one liter of each of the above four kinds of sample water for mixture. This mixture was adjusted to the pH range of 6.1 - 6.8 and was left for about 60 minutes stationarily to ripen sedimentation. Protein was separated by sedimentation and a trace amount of oil was separated by rising to the surface as drops of oil. The supernatant water was measured as treated water.

In this treatment, pH was adjusted by proton dissolved water and protein and others contained in water were precipitated. In order to ascertain if generation of precipitation can be effected by adjusting pH by any other method, pH was adjusted by using 0.1N HCl, L-ascrobic acid (10w/v%) and $1N-H_2SO_4$, but no precipitate was generated. From this fact, it was ascertained that the phenomenon of precipitating protein contained in water is a reaction which can only be generated by the above method of donating proton.

(Results of measurement)

Measured values of each ingredient before and after treatment are as shown in Table 3. Values after treatment are analysis values of supernatant water.

## Table 3

| Ingredient<br>Sample | pH | n-hexane<br>extract<br>(ppm) | degree of<br>turbidity<br>(°) | Protein<br>(ppm) | Water<br>temperature<br>(°C) |
|---|---|---|---|---|---|
| Untreated water containing albumen | 6.8 | < 0.5 | 27 | 34 | 27 |
| Treated water containing albumen | 6.5 | < 0.5 | < 1 | 1 | 27 |
| Untreated fish processing water | 7.1 | < 0.5 | 20 | 61 | 27 |
| Treated fish processing water | 6.8 | < 0.5 | 2 | 5 | 27 |
| Untreated food processing water containing soluble protein | 6.8 | < 0.5 | 8 | 136 | 27 |
| Treated food processing water containing soluble protein | 6.7 | < 0.5 | < 1 | 8 | 27 |
| Untreated water containing vegetable protein | 7.6 | 5.2 | 18 | 88 | 27 |
| Treated water containing vegetable protein | 6.8 | < 0.5 | 2 | 6 | 27 |

In any treated water, good protein coagulating sedimentation was generated and protein could be separated and recovered from a water system.

(Percentage of recovery: 92 - 95%)

Regarding the separation of a trace amount of oil less than 0.5ppm, its numerical value could not be measured, but the separation of it was proved by the fact that drops of oil rose to the surface and the degree of turbidity lowered considerably.

The separation of a trace amount of oil is apparent from the difference in measured values, between before and after treatment, of n-hexane extract of water containing vegetable protein.

The features disclosed in the foregoing description and in the following claims may, both separately and in any combination thereof, be material for realising the invention in diverse forms thereof.

## Claims

Method of separating and recovering a trace amount of oil and/or protein contained in water by donating proton to water containing a trace amount of oil and/or protein.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-1 803 544 (HOWALDTSWERKE-DEUTSCHE WERFT AG) <br> * Page 2, lines 19-20; claims 1,3 * <br> --- | 1 | B 01 D 17/05 <br> C 02 F 1/40 <br> C 02 F 1/66 // <br> C 02 F 1/52 |
| X | US-A-2 504 019 (I.D. HALL) <br> * Column 1, lines 1-8; column 2, lines 27-59; claims 1-5,7,8 * <br> --- | 1 | |
| X | PATENT ABSTRACTS OF JAPAN, vol. 4, no. 38 (C-4)[520], 27th March 1980; & JP-A-55 13 046 (FUTABA DENKI KOUGIYOU K.K.) 29-01-1980 <br> * Abstract * <br> ----- | 1 | |

TECHNICAL FIELDS
SEARCHED (Int. Cl.4)

B 01 D
C 02 F

The present search report has been drawn up for all claims

| Place of search | Date of completion of the search | Examiner |
|---|---|---|
| THE HAGUE | 03-06-1988 | VAN IDDEKINGE R.E. |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

& : member of the same patent family, corresponding
　　document

EPO FORM 1503 03.82 (P0401)